# EUROPÄISCHE PATENTSCHRIFT

(11) **EP 0 447 633 B1**
(45) Veröffentlichungstag und Bekanntmachung des Hinweises auf die Patenterteilung: **22.02.1995**
(21) Anmeldenummer: 90123236.3
(22) Anmeldetag: 04.12.1990
(51) Int. Cl.: G01K 11/06

(54) **Gegenstand mit einem Temperaturindikator**
Object with a temperature-indicator
Objet pourvu d'un indicateur de températures

(30) Priorität: 21.03.1990 DE 4009115
(43) Veröffentlichungstag der Anmeldung: 25.09.1991
(73) Patentinhaber: RXS Schrumpftechnik-Garnituren GmbH, D-58093 Hagen (DE)
(72) Erfinder: Basten, Dunja, W-5800 Hagen (DE); Binnewirtz, Ralf, Dr., W-4150 Krefeld 1 (DE); Pieper, Detlef, Dr., W-8633 Rödental (DE)
(74) Vertreter: Fuchs, Franz-Josef, Dr.-Ing.

(56) Entgegenhaltungen:
- EP-A- 0 044 750
- GB-A- 2 176 903
- US-A- 4 688 713

## Beschreibung

Die Erfindung betrifft einen Gegenstand mit einem darauf angebrachten Temperaturindikator, der ein Bindemittel und mindestens eine feinkörnige, organische Substanz enthält, die unterhalb einer bestimmten Temperatur weitgehend undurchsichtig ist und die bei Erreichen dieser Temperatur schmilzt und die optischen Eigenschaften ändert, so daß der Temperaturindikator durchsichtig oder durchscheinend wird.

Als Temperaturindikatoren oder thermochrome Überzüge werden im allgemeinen Materialien bezeichnet, die beim Erwärmen auf eine durch die Materialzusammensetzung genau definierte Temperatur ihre Farbe ändern.

Inzwischen hat sich die Verwendung von thermochromen Materialien als Temperaturindikatoren auch bei wärmeschrumpfbarem Produkten, wie zum Beispiel bei wärmeschrumpfbaren Manschetten aus vernetzten Polymeren, durchgesetzt. Bei derartigen wärmeschrumpfbaren Produkten werden auf der inneren Oberfläche wärmeaktivierbare Dichtungsmittel, zum Beispiel Heißschmelzkleber, aufgebracht, die bei einer bestimmten Temperatur schmelzen und die gewünschte dichtende Verbindung zwischen dem warmgeschrumpften Produkt und dem zu umhüllenden Substrat herstellen. Für die ausreichende Wärmeaktivierung muß die entsprechende Erwärmung durch äußere Wärmeeinwirkung, zum Beispiel durch Beflammung erfolgen. Diese Wärmeaktivierung kann jedoch eine stärkere Erwärmung erfordern als für den eigentlichen Schrumpfvorgang des wärmeschrumpfbaren Produktes erforderlich ist. Um nun gewährleisten zu können, daß auf der Innenseite die nötige Wärmeaktivierung erfolgt ist, wird die Außenfläche des wärmeschrumpfbaren Produktes mit einem Temperaturindikator versehen, der durch seinen Farbumschlag anzeigt, daß auf der Außenfläche die Temperatur erreicht ist, bei der davon ausgegangen werden kann, daß auf der Innenseite die erforderliche Wärmeaktivierung des Dichtungsmittels erfolgreich abgeschlossen ist. Weiterhin wird durch die Temperaturindikation auch vermieden, daß die Außenseite eine unnötige Erhitzung erfährt, die unter Umständen zu Materialschädigungen führen kann. Die Temperaturindikation muß außerdem irreversibel sein, so daß gewährleistet ist, daß während der Wärmebehandlung der einmal erfolgte Farbumschlag auch bestehen bleibt.

In diesem Zusammenhang sind thermochrome Zusammensetzungen zum Beispiel aus der US-Patentschrift 4.344.909 bekannt, die ein organisches Material enthalten, das sich unter einer sichtbaren Farbänderung zersetzt. Dieser Farbumschlag erfolgt z.B. von grün nach schwarz, wobei unter anderem eine gewisse Verkokung eintritt. Die Zersetzungsprodukte der organischen Materialien sind farblos, und für die anfangs bestehende Grünfärbung sind Pigmente zugesetzt. Bei diesen Zersetzungsreaktionen ergeben sich gasförmige Zersetzungsprodukte, sowie kohle- und teerähnliche Rückstände auf der Manschettenoberfläche, wobei auch Kraterbildungen nicht ausgeschlosen sind. Außerdem besteht die Gefahr einer Farbrückbildung durch Reaktion der Bodenfeuchtigkeit infolge der Freisetzung unzersetzter grüner Pigmentteilchen. Eine Gegenmaßnahme hierzu ist aus der europäischen Patentschrift 0 042 285 bekannt. Dabei wird so vorgegangen, daß das Bindemittel mit dem zersetzten organischen Material eine Wechselwirkung eingeht, um den Auslaugvorgang aus der Zusammensetzung zu verhindern.

Bei älteren Lösungen zur Temperaturindikation wurden vielfach anorganische Pigmente ausgewählt, die bei den vorgegebenen Temperaturen eine Farbänderung erfahren. Als solche Pigmente wurden überwiegend Salze von Schwermetallen, wie Blei, Kobalt, Cadmium, Nickel, Chrom, Quecksilber oder Kupfer verwendet (siehe Chemie-Lexikon, Dr. Hermann Römpp, 2. Auflage, 1950, Seite 1631). Solche Verbindungen wurden beispielsweise mit einem geeigneten Bindemittel aus Kunstharz und Spiritus gemischt und konnten dann mit Pinseln bzw. Spritzpistolen auf die zu überwachenden Gegenstände aufgebracht werden. Hier ist jedoch von Nachteil, daß die Verwendung solcher Materialien zumindest eine unerwünschte, häufig sogar unerlaubte Umweltbelastung bedeuten. Außerdem schädigen anorganische Thermochrome u. U. das schrumpffähige Material, insbesondere während des Schrumpfprozesses. Hier können sich auf der Oberfläche entsprechende Krater bilden, wobei auch eine katalytische Zersetzungsreaktion an der Oberfläche zu erwarten ist, die sich auch im späteren Einsatz noch auswirken kann. Um zumindest diese letzten Nachteile abzumindern, wurden solchen Verbindungen Zusätze beigegeben wie sie in der US-Patentschrift 4.121. 011 beschrieben sind.

Im Stand der Technik findet sich auch ein gänzlich anderer Lösungsweg zur Temperaturindikation. Dabei werden Materialien verwendet, die im Ausgangszustand im wesentlichen undurchsichtig sind, die jedoch bei Überschreiten einer bestimmten Temperatur schmelzen, dabei ihre optischen Eigenschaften ändern und durchsichtig bzw. durchscheinend werden. Auf diese Weise wird die Unterlage bzw. die Farbe der Unterlage sichtbar, so daß dieser Vorgang als Temperaturindikation genutzt werden kann. So wird beispielsweise in der deutschen Offenlegungsschrift 33 07 567 ein wärmeerholbarer Gegenstand beschrieben, bei dem eine bei Normaltemperatur opake, äußere Schicht aus Polyethylen oder Polypropylen aufextrudiert ist. Bei Erreichen der Kristallisationstemperatur wird die äußere durchgehende Schicht transparent und die Farbe der Innenschicht wird sichtbar.

Aus der deutschen Offenlegungsschrift 33 26 021 wird als Temperaturindikator bei einem wärmeerholbaren Gegenstand eine Überzugszusammensetzung aus einem Pigment mit einem Bindemittel verwendet. Pigment und Bindemittel bestehen aus Materialien unterschiedlicher Brechungsindexe. Bei Erreichen der Schmelztemperatur des Pigments und/oder Bindemittels bildet sich ein Stoff mit einheitlichem Brechungsindex. Diese Änderung im Brechungsindex führt zu einem sichtbaren Farbumschlag.

Bei den in der US-Patentschrift 2.269.038 beschriebenen Farbindikatoren werden feinkörnige Substanzen mit einem geeigneten Bindemittel verwendet. Diese Substanzen werden als Film auf nichtveränderbare Unterlagen aufgebracht. Bei Überschreitung einer durch den Stoff vorgegebenen Temperatur schmilzt diese Substanz aus dem anorganischen Pigment und dem Bindemittel. Dieser Vorgang führt dazu, daß der Überzug durchsichtig wird, so daß die Farbe der Unterlage erkennbar wird. Ein Temperaturindikator nach der US-Patentschrift 2.928.791 besteht aus einer weißen kristallinen, organischen Substanz, das bei Erreichen der Schmelztemperatur schmilzt und von dem Träger absorbiert wird, wodurch sich ein sichtbarer, irreversibler Farbumschlag ergibt. In gleicher Weise reagiert ein als Temperaturindikator ausgebildetes Papierthermometer nach der US-Patentschrift 2.799.167, bei dem ebenfalls kristalline, organische Pigmente verwendet werden, die bei einem definierten Schmelzpunkt schmelzen und somit durchsichtig werden. Auch hier sind diese Farbindikatoren auf feste unveränderliche Unterlagen aufgebracht. Auch in der US-Patentschrift 3.002.385 werden organische Stoffe und Mischungen von anorganischen Salzen zur Temperaturindikation verwendet. Wenn hier die vorgegebene Temperatur erreicht ist, schmilzt das Material wiederum und wird von der gefärbten Unterlage absorbiert.

Aufgabe der vorliegenden Erfindung ist nun, einen Gegenstand mit einem Temperaturindikator zu schaffen, der in einfacher und preiswerter Weise herzustellen ist und bei dem im Anwendungsfall keine Reaktionsprodukte freigesetzt werden, wobei auch eine gute Verträglichkeit mit der Oberfläche des Gegenstandes gewährleistet sein muß. Die gestellte Aufgabe wird nun mit einem Gegenstand der eingangs erläuterten Art dadurch gelöst, daß als Substanz mindestens ein organisches Polymer verwendet ist und daß diese Substanz auf einem wärmeschrumpffähigen Gegenstand aufgebracht ist, wobei der Schmelzpunkt des Temperaturindikators mindestens im Bereich, vorzugsweise oberhalb des Bereiches, der Rückstelltemperatur des wärmeschrumpffähigen Gegenstandes liegt.

Bei dem Gegenstand, gemäß der Erfindung, sind nun Vorteile darin zu sehen, daß durch Verwendung einer ohne Zersetzung schmelzbaren, organischen Substanz im Temperaturindikator keine schädlichen Zersetzungsprodukte entstehen, die entweder die Umwelt belasten könnten, oder die schädigende Einflüsse auf die Oberfläche des beschichteten Gegenstandes ergeben. Außerdem ist durch die als Polymer ausgebildete organische Substanz gewährleistet, daß sich bei der Formänderung des wärmeschrumpffähigen Gegenstandes keine Schwierigkeiten bezüglich der Ablösung von der Oberfläche ergeben. Bei dem durch die Substanz bestimmten Temperaturanzeigepunkt erfolgt nun, gemäß der Erfindung, lediglich ein Schmelzen der organischen Substanz und des Bindemittels, wobei diese Schmelze durchsichtig bzw. zumindest durchscheinend wird und auch nach der Abkühlung in diesem Zustand bleibt. Dadurch wird die Farbe auf der Oberfläche des Gegenstandes bzw. des Gegenstandes selbst sichtbar. Dieser auf diese Weise erfolgte irreversible "Farbumschlag" ist das Kennzeichen dafür, daß die gewünschte Temperatur erreicht worden ist, wobei dieser Vorgang zusätzlich auch als Warnung anzusehen ist, daß ab dieser Temperatur unter Umständen eine Schädigung des Gegenstandes eintreten kann. Man kann jedoch auch eine organische Substanz mit einem Schmelzpunkt so wählen, daß damit eine andere Temperaturschwelle erkannt wird. Beispielsweise ist wichtig, zu erkennen, ob auf der Außenseite eines wärmeschrumpffähigen Gegenstandes genügend Wärme zur Aktivierung eines im Inneren aufgetragenen, wärmeaktivierbaren Dichtungsmittels, wie z.B. eines Heißschmelzklebers der bekannten Art, aufgebracht wurde.

Als Temperaturindikator für einen wärmeschrumpfbaren Gegenstand gemäß der Erfindung, wird ein feinteilig vermahlenes, organisches Polymer verwendet, wobei die mittlere Korngröße vorteilhaft 50 »m beträgt. Die meist als Granulat vorliegenden Polymere müssen für die Verwendung als "Pigment" vermahlen werden. Dies erfolgt in geeigneten Mühlen unter Kühlung, besonders geeignet hierfür sind Prallmühlen, wobei die Mahlung z.B. unter Kühlung mit flüssigem Stickstoff erfolgt. Die Mahlung erfolgt mindestens auf Siebkorngröße ≦ 200 »m; bevorzugt auf Siebkorngröße ≦ 100 »m, wobei die mittlere Korngröße etwa 50 »m beträgt. Ein feiner "Farbauftrag" wird vorteilhafterweise durch Verwendung eines auf ≦ 40 »m Siebkorngröße gemahlenen Polymers erzielt, wobei die mittlere Korngröße bei dieser Mahlung bei 10 - 20 »m beträgt. Ein solches feinteilig gemahlenes, organisches Polymer wird als Suspension in einer Lösung eines geeigneten Bindemittels, zusammen mit einem Lösungsmittel auf den wärmeschrumpffähigen Gegenstand aufgebracht. Diese Beschichtung zeigt ein je nach Mischung im allgemeinen mehr oder weniger weißes Erscheinungsbild. Bei Erreichen der vorgegebenen Temperaturschwelle beim Schrumpfvorgang schmelzen nun das organische Polymer und das Bindemittel und es bildet sich eine durchsichtige oder zumindest durchscheinende Schmelze aus den feinteiligen organischen Polymerteilchen und dem Bindemittel. Der unter dieser Schmelze liegende Gegenstand bestimmt nun das neue Erscheinungsbild mit seiner ihm eigenen Farbe, z.B. schwarz, wenn der Gegenstand z.B. aus einem an sich bekannten mit Ruß versetzten Schrumpfcompound auf der Basis von Polyethylen besteht. Dabei entstehen keine Zersetzungsprodukte und da das Material des Temperaturindikators auch auf Verträglichkeit mit dem Material des wärmeschrumpfenden Gegenstandes hin ausgewählt ist, erfährt die Oberfläche des wärmeschrumpffähigen Gegenstandes keine schädigende Veränderung.

Vorzugsweise werden bei der Erfindung hochpolymere organische Substanzen verwendet, die ein mittleres Molekulargewicht Mₙ im Bereich von 10³ bis 10⁶, vorzugsweise von 10⁴ bis 10⁵ aufweisen.

Obwohl das organische Polymer gemäß der Erfindung im wesentlichen farblos ist, kann man es als "Pigment" im Sinne eines sichtbaren Farbumschlages bei Temperaturindikatoren bezeichnen, da es im feinteilig gemahlenen Zustand ein weißes Erscheinungsbild ergibt. Das gemahlene Polymer und das entsprechende Bindemittel werden vorteilhafter Weise mit einem Lösungsmittel versehen, so daß es für die Aufbringung auf den schrumpffähigen Gegenstand in streich- oder spritzfähiger Form vorliegt. Das Aufbringen auf den Gegenstand ist dementsprechend besonders einfach und preisgünstig. Im einen Fall kann es, z.B. mit einem Pinsel, als flächendeckender Film aufgestrichen werden. Dies bedeutet, daß der Gegenstand vollflächig mit dem Temperaturindikator bedeckt ist. Bei Verwendung von Spritz- oder Sprühwerkzeugen, wie z.B. einer Spritzpistole, kann der "Bedeckungsgrad" je nach Wunsch und Erfordernis gewählt werden; denn es ist im Prinzip nicht nötig, daß eine vollflächige Deckung vorliegt. Beim Sprühen oder Spritzen bilden sich mehr oder weniger große, nicht zusammenhängende Tröpfchen auf der Oberfläche des Gegenstandes, die als "Farbtröpfchen" in Erscheinung treten, wobei das Lösungsmittel beim anschließenden Trocknungsvorgang verdunstet. Zwischen den "Farbtröpfchen" ist die Oberflächenfarbe des Gegenstandes sichtbar. Bei Erreichen der vorgegebenen Temperaturschwelle werden die "Farbtröpfchen" aufgeschmolzen und es entstehen jeweils kleine durchsichtige oder durchscheinende (transluzente) Filmbereiche. Auf diese Weise schlägt das Erscheinungsbild farblich um und die Oberfläche zeigt über den gesamten Bereich hinweg die Farbe des Gegenstandes. Auch hier handelt es sich wie beim Gesamtfilm um einen irreversiblen Vorgang. Statt Aufsprühen kann auch ein anderes der üblichen Auftragsverfahren, wie beispielsweise Drucken, zur Erzielung konkreter Temperaturindikatoren angewandt werden.

Die Verwendung von feinkörnigen, organischen Polymeren als "Pigment" mit einem geeignetem Bindemittel ergibt gegenüber den bisher verwendeten, niedermolekularen, schmelzenden Substanzen folgende Vorteile:
- Die organischen Polymere ergeben als Überzug, ob als Gesamtfilm oder als Tröpfchen aufgetragen, einen elastischen Film, der keinerlei schädigende Auswirkungen während des Schrumpfens und insbesondere in der Abkühlphase ausübt. So tritt beispielsweise auch keine Kraterbildung auf der Oberfläche auf.
- Die elastischen Eigenschaften der organischen Polymere sind besonders bei den Formänderungen des wärmeschrumpffähigen Gegenstandes von Vorteil, da sie diese unbeschadet mitmachen.
- Es sind keine umweltschädigenden Stoffe, wie Schwermetalle enthalten.
- Es erfolgt keine thermische Zersetzung, so daß auch keine gasförmigen oder teerähnlichen Zersetzungsprodukte anfallen.
- Vorteilhaft ist die Verwendung hochpolymerer organischer Substanzen.
- Die erstarrte Polymerschmelze bleibt auf jeden Fall vollständig als elastischer Film bzw. Filmbereich bestehen. Es erfolgt keine Rekristallisation wie sie bei den niedermolekularen Substanzen nie ganz auszuschließen ist. Die dort auftretende Sprödigkeit niedermolekularer Substanzen kann gegebenenfalls zur Bildung neuer Korngrenzen führen, so daß eine zumindest teilweise Rückführung in den Ausgangszustand erfolgt.
- Es tritt bei der Wärmebehandlung auch keine Verflüchtigung auf. Bei niedermolekularen Substanzen entstehen unter Umständen durch teilweise Sublimation wieder neue Rückbildungen (z.B. weiße Stellen).

Ausführungsbeispiele von Gegenständen mit aufgebrachten Temperaturindikatoren gemaß der Erfindung werden nun anhand von vier Figuren näher erläutert.
- Fig. 1: zeigt einen als Gesamtfilm auf den Gegenstand aufgebrachten Temperaturindikator vor der Wärmebehandlung.
- Fig. 2: zeigt den Zustand des Temperaturindikators nach Fig. 1 nach der Wärmebehandlung.
- Fig. 3: zeigt einen in Tröpfchenform auf den Gegenstand aufgebrachten Temperaturindikator vor der Wärmebehandlung.
- Fig. 4: zeigt den Zustand des Temperaturindikators nach Fig. 3 nach der Wärmebehandlung.
- Fig. 5: zeigt als warmgeschrumpften Gegenstand eine Manschette mit Temperaturindikator.

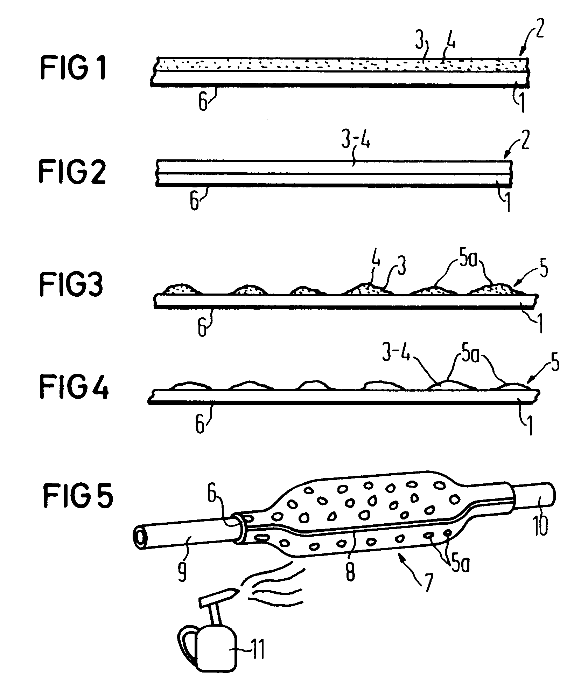

In Fig. 1 wird erläutert, daß ein wärmeschrumpffähiger Gegenstand 1 gemäß der Erfindung, z.B. eine Manschette mit einem Längsverschluß zur Umhüllung von Gegenständen wie etwa einem Kabelspleiß, mit einem Temperaturindikator 2 beschichtet ist. Dieser ist als durchgehend flächenhafter Gesamtfilm auf dem eine bestimmte Farbe, vorzugsweise schwarz, aufweisenden, wärmeschrumpffähigen Gegenstand 1 aufgebracht, wobei angedeutet ist, daß die feinteilig gemahlenen, organischen Polymerteilchen 4 als Suspension in einer Lösung eines geeigneten Bindemittels 3 fest auf der Oberfläche gebunden aufliegen. Diese Darstellung soll durch die markierte feinteilige Körnung des organischen Polymers 4 zum Ausdruck bringen, daß der Farbindikator 2 in diesem Zustand undurchsichtig ist. Auf der zweiten Seite des wärmeschrumpffähigen Gegenstandes 1 ist, wie in allen folgenden Figuren, eine Beschichtung aus einem wärmeaktivierbaren Dichtungsmittel 6, z.B. ein Heißschmelzkleber der bekannten Art, angedeutet, für den z.B. der Temperaturindikator auf der Außenseite zur Überwachung einer ausreichenden Wärmeaktivierung angeordnet ist.

Die Fig. 2 soll hingegen erläutern, daß nach der Wärmebehandlung die feinteilige Körnung des organischen Polymers 4 verschwunden ist und daß sich ein gleichmäßiger durchsichtiger oder zumindest durchscheinender Film 3-4 gebildet hat. Nun ist durch diesen Film 3-4 hindurch die Farbe des darunter liegenden Gegenstandes 1 sichtbar geworden. Durch diesen "Farbumschlag" ist angezeigt, daß die Wärmebehandlung beendet werden kann.

Die Fig. 3 zeigt nun ein zweites Ausführungsbeispiel zur Auftragung eines Temperaturindikators 5 auf einen wärmeschrumpffähigen Gegenstand 1, wobei er hier in Tröpfchenform 5a, z.B. durch Aufsprühen oder Aufspritzen aufgebracht ist. Es ist ersichtlich, daß zwischen den einzelnen Tröpfchen 5a immer noch freie, nicht beschichtete Bereiche des wärmeschrumpffähigen Gegenstandes 1 liegen, so daß hier die Farbe des wärmeschrumpffähigen Gegenstandes 1 in Erscheinung tritt. Die Tröpfchen 5a zeigen jedoch vor der Wärmebehandlung als "Pigment" ihr dem organischen Polymer und dessen Korngröße entsprechendes Erscheinungsbild bezüglich der Farbe. Es ergibt sich also in diesem Fall ein Erscheinungsbild entsprechend der Farbe des wärmeschrumpffähigen Gegenstandes 1 (z.B. schwarz), in dem den Tröpfchen 5a entsprechende Farbtupfen (z.B. weiß oder grau) verschiedener Größe mehr oder weniger gleichmäßig verteilt sind.

Die Fig. 4 verdeutlicht nun den wärmeschrumpffähigen Gegenstand 1 nach der Wärmebehandlung und man erkennt, daß die Körnung des organischen Polymers 4 im Bindemittel 3 (und damit die z.B. weißen oder grauen Farbtupfen) durch Schmelzen verschwunden ist und daß sich einheitliche, durchsichtige oder zumindest durchscheinende Tröpfchen 5a einer Schmelze 3-4 aus dem organlschen Polymer 4 und dem Bindemittel 3 gebildet haben. Auf diese Weise ist nun auch durch diese Tröpfchen 5a hindurch die Farbe des darunterliegenden und bisher verdeckten Bereiches des nun warmgeschrumpften Gegenstandes 1 sichtbar und es ergibt sich insgesamt ein Erscheinungsbild, das durchgehend der Farbe des warmgeschrumpften Gegenstandes 1 entspricht. Bei Verwendung normal üblicher Schrumpfcompounds ergibt sich somit ein vollständig schwarzes Erscheinungsbild.

In Figur 5 ist als wärmeschrumpfbarer Gegenstand eine bereits geschrumpfte Umhüllung 7 in Form einer Manschette mit einem Längsverschluß 8 für einen Kabelspleiß bzw. eine Verbindung von Kabeln 9, 10 dargestellt. Durch die als Flecken 5a gekennzeichneten Bereiche wird angedeutet, daß hier Filmbereiche des Temperaturindikators vorhanden sind, die - da der geschrumpfte Zustand dargestellt ist - durchsichtig geworden sind und die Farbe der Manschette durchscheinen lassen. Die Dichtung zu den Kabeln 9, 10 erfolgt durch die Innenbeschichtung aus Heißschmelzkleber 6. Die Wärmezufuhr erfolgt zweckmäßigerweise mit einer Lötlampe 11.

Für die als "Pigmente" anzusehenden organischen Polymere können für den bei der Erfindung verwendeten Temperaturindikator, Thermoplaste, bevorzugt teilkristalline Thermoplaste eingesetzt werden, die in dem gewünschten Temperaturbereich eine Zustandsänderung von fest zu schmelzflüssig erfahren. Das verwendete Polymer ist im Normalzustand zweckmäßigerweise farblos und erhält sein farbiges Aussehen durch die feinkörnige Verteilung. Vorteilhaft werden feinkörnig gemahlene Polyamide, insbesondere PA 6, PA 66, PA 610 oder PA 12 oder Gemische aus denselben verwendet. Es kann auch zweckmäßig sein, Polyester, vorzugsweise Polybutylenterephthalat, zu verwenden. Weiterhin eignen sich hierfür auch Polycarbonate, Polyolefine wie Poly-4-methylpenten-1, Olefincopolymerisate u.a.

Als Bindemittel wird vorteilhaft ein polymeres Harz, vorzugsweise ein Acrylatharz, wie z.B. Paraloid B66 verwendet. Das Bindemittel muß so gewählt sein, daß zwischen ihm und dem organischen Polymer keine chemische Reaktion stattfindet, damit die Körnung der Polymere und die daraus resultierende, zum Beispiel weiße oder graue, Farbe erhalten bleibt. Als Bindemittel kommen weiterhin in Frage:
- Alkydharze, acrylierte Alkylharze
- Maleinatharze
- Ethylenvinylacetatcopolymere
- Ethylenacrylsäure-, Ethylenacrylat-Copolymere
- Terpolymere der Monomeren Ethylen, Vinylacetat, Acrylsäure, Acrylsäureester, Maleinsäureanhydrid
- Ionomere
- Polyamidharze
Diese Harze können allein oder in Abmischungen miteinander verwendet werden, um optimale Hafteigenschaften zu erzielen. Diese genannten Polymere haben bevorzugt ein mittleres Molekulargewicht von 3.000 bis 50.000.

Es sind aber auch weitere Materialien, die zu schrumpffähigen Gegenständen eine ausreichende Haftung besitzen, als Bindemittel geeignet, gegebenenfalls auch als Zusatz zu den vorstehend genannten Harzen, zum Beispiel Kautschuklatices.

Zur weiteren Steigerung der Hafteigenschaften können weitere Haftverbesserungsmittel zugesetzt werden, vorteilhaft Spezial Primer V 144 von der Firma Worlée.

Als Lösungsmittel kann 1.1.1-Trichlorethan eingesetzt werden.

Es können aber auch andere organische Lösungsmittel, abgestimmt auf das Bindemittel und das "Pigment" verwendet werden. Das "Pigment" darf jedoch vom Lösungsmittel nicht gelöst werden, da sonst die durch die Körnigkeit hervorgerufene "Farbe", zum Beispiel weiß oder grau, nicht mehr in Erscheinung tritt.

Bei Bedarf kann dieser Zusammensetzung ein Zusatz von Ruß mit einem Gewichtsanteil von ≦ 1 % beigesetzt werden. Der durch Rußzusatz grau erscheinende Temperaturindikator verschmilzt zu einer schwarzen Schmelze und es erfolgt somit ein Farbumschlag zu schwarz ohne schwarzen Untergrund. Der Rußzusatz trägt gleichzeitig zur UV-Stabilisierung des Temperaturindikators bei.

Als weitere Zusatzstoffe zur Verbesserung spezifischer Eigenschaften zu den oben genannten Stoffen kommen vorteilhaft in Betracht:
- zusätzliche Pigmente, vorteilhaft Azopigmente wie das bekannte Hansagelb G
- Antioxidantien, vorteilhaft mehrkernige, sterisch gehinderte Phenole wie beispielsweise die bekannten Produkte Irganox 1010, Topanol CA, Nonox WSP
- Mittel zur Verhinderung von Hautbildung, vorteilhaft Ketoxime wie Metoxim, Butoxim der Firma Acima AG.
- Thixotropiemittel auf organischer Basis, vorteilhaft Rizinusölderivate wie Thixatrol ST oder Thixatrol GST der Firma Kronos Titan GmbH.

Beispiel eines erfindungsgemäßen Temperaturindikators:
Mit einer Zusammensetzung, bestehend aus 25 g Polyamid 12 als "Pigment", 12,5 g Paraloid B66 als Bindemittel und 20 g 1.1.1-Trichlorethan als Lösungsmittel wurde ein Temperaturindikator erstellt, der einen Schmelzpunkt von ca. 175° C hat. Der Zusammensetzung kann auch 0,025 g Ruß zugesetzt werden. Diese Zusammensetzung wurde mit einer Spritzpistole als weißer oder grauer (mit Rußzusatz) Belag auf eine wärmeschrumpffähige Manschette aufgebracht. Nach dem Verdunsten des Lösungsmittels wurde die Manschette in üblicher Technik mit einer offenen Flamme auf ein Rohr mit einem dem maximalen Anwendungsbereich entsprechenden Durchmesser aufgeschrumpft. Es trat ein deutlicher "Farbumschlag" von ursprünglich weiß oder grau nach schwarz ein. Dabei entstanden keine Schädigungen auf der Manschettenoberfläche, keine Zersetzungsprodukte und nach dem Abkühlen trat auch keine Farbrückbildung ein.

Im allgemeinen liegen für die Anwendungsgebiete bei schrumpffähigen Gegenständen, wie Umhüllungen und dergleichen, die Temperaturbereiche zwischen 150° C und 300° C, so daß der Schmelzpunkt für die Temperaturindikatoren ebenfalls in diesem Temperaturbereich liegen muß. Durch geeignete Wahl der einzelnen Materialien und der Korngröße lassen sich solche Umschlagpunkte gezielt festlegen.

Bei einem weiteren Ausführungsbeispiel wurde das vorher verwendete Polyamid 12 gegen das Polyamid 6 ausgetauscht. Bei sonst gleichen Verhältnissen liegt nun der Schmelzpunkt der Zusammensetzung und damit der "Farbumschlagpunkt" des Temperaturindikators bei 215° C.

Ein weiteres Ausführungsbeispiel für eine Zusammensetzung gemäß der Erfindung beruht auf der Verwendung eines organischen Polymers auf der Basis von Polybutylenterephthalat. Die Grundzusammensetzung besteht aus:
25 g Polybutylenterephthalat (Vestodur 1000 nf)
12 g Polyvinylisobutylether (Lutonal I 30)
19 g Ethylmethylketon / Butylacetat (im Mischungsverhältnis 50 : 50)
2,5 g Spezial-Primer V 944

## Patentansprüche

1. Gegenstand (1) mit einem darauf angebrachten Temperaturindikator (2, 5), der ein Bindemittel (3) und mindestens eine feinkörnige, organische Substanz (4) enthält, die unterhalb einer bestimmten Temperatur weitgehend undurchsichtig ist und die bei Erreichen dieser Temperatur schmilzt und die optischen Eigenschaften ändert, so daß der Temperaturindikator (2, 5) durchsichtig oder durchscheinend wird,
**dadurch gekennzeichnet,**
daß als Substanz mindestens ein organisches Polymer (4) verwendet ist und daß diese Substanz auf einem wärmeschrumpffähigen Gegenstand (1) aufgebracht ist, wobei der Schmelzpunkt des Temperaturindikators (2, 5) mindestens im Bereich, vorzugsweise oberhalb des Bereiches, der Rückstelltemperatur des wärmeschrumpffähigen Gegenstandes (1) liegt.

2. Gegenstand (1) nach Anspruch 1,
**dadurch gekennzeichnet,**
daß der Farbindikator (2, 5) eine durch Mahlen hergestellte, feinkörnige Substanz enthält.

3. Gegenstand (1) nach einem der Ansprüche 1 oder 2,
**dadurch gekennzeichnet,**
daß die Substanz eine Siebkorngröße von ≦ 200 »m, vorzugsweise ≦ 100 »m aufweist, wobei die mittlere auftretende Korngröße zwischen 10 und 50 »m liegt.

4. Gegenstand (1) nach einem der vorhergehenden Ansprüche,
**dadurch gekennzeichnet,**
daß die Umschlagtemperatur im Bereich zwischen 150° C und 300° C, vorzugsweise zwischen 200 und 260 liegt.

5. Gegenstand (1) nach einem der vorhergehenden Ansprüche,
**dadurch gekennzeichnet,**
daß die Substanz aus einem Gemisch mehrerer Polymere besteht.

6. Gegenstand (1) nach einem der vorhergehenden Ansprüche,
**dadurch gekennzeichnet,**
daß das organische Polymer ein Polyamid ist.

7. Gegenstand (1) nach Anspruch 6,
**dadurch gekennzeichnet,**
daß das Polymer Polyamid 6 ist.

8. Gegenstand (1) nach Anspruch 6,
**dadurch gekennzeichnet,**
daß das Polymer Polyamid 66 ist.

9. Gegenstand (1) nach Anspruch 6,
**dadurch gekennzeichnet,**
daß das Polymer Polyamid 610 ist.

10. Gegenstand (1) nach Anspruch 6,
**dadurch gekennzeichnet,**
daß das Polymer Polyamid 12 ist.

11. Gegenstand (1) nach einem der Ansprüche 1 bis 5,
**dadurch gekennzeichnet,**
daß das organische Polymer ein Polyester ist.

12. Gegenstand (1) nach Anspruch 11,
**dadurch gekennzeichnet,**
daß das organische Polymer Polybutylenterephthalat ist.

13. Gegenstand (1) nach einem der Ansprüche 1 bis 5,
**dadurch gekennzeichnet,**
daß das organische Polymer ein Polycarbonat ist.

14. Gegenstand (1) nach einem der Ansprüche 1 bis 5,
**dadurch gekennzeichnet,**
daß das organische Polymer ein Polyolefin ist.

15. Gegenstand (1) nach Anspruch 14,
**dadurch gekennzeichnet,**
daß das organische Polymer Poly-4-methylpenten-1 ist.

16. Gegenstand (1) nach einem der Ansprüche 1 bis 5,
**dadurch gekennzeichnet,**
das organische Polymer ein Olefincopolymerisat ist.

17. Gegenstand (1) nach einem der vorhergehenden Ansprüche,
**dadurch gekennzeichnet,**
daß das Polymer zumindest teilkristallin ist .

18. Gegenstand (1) nach einem der vorhergehenden Ansprüche,
**dadurch gekennzeichnet,**
daß der "Farbumschlag" von weiß nach schwarz erfolgt.

19. Gegenstand (1) nach einem der vorhergehenden Ansprüche,
**dadurch gekennzeichnet,**
daß als Bindemittel ein polymeres Harz verwendet ist.

20. Gegenstand (1) nach Anspruch 19,
**dadurch gekennzeichnet,**
daß das Bindemittel ein Acrylatharz, vorzugsweise Paraloid B66, ist.

21. Gegenstand (1) nach Anspruch 19,
**dadurch gekennzeichnet,**
daß das Bindemittel ein Alkydharz, vorzugsweise ein acryliertes Alkydharz, ist.

22. Gegenstand (1) nach Anspruch 19,
**dadurch gekennzeichnet,**
daß das Bindemittel ein Maleinatharz ist.

23. Gegenstand (1) nach Anspruch 19,
**dadurch gekennzeichnet,**
daß das Bindemittel ein Ethylenvinylacetatcopolymer ist.

24. Gegenstand (1) nach Anspruch 19,
**dadurch gekennzeichnet,**
daß das Bindemittel Ethylenacrylsäure-Copolymer ist.

25. Gegenstand (1) nach Anspruch 19,
**dadurch gekennzeichnet,**
daß das Bindemittel Ethylenacrylat-Copolymer ist.

26. Gegenstand (1) nach Anspruch 19,
**dadurch gekennzeichnet,**
daß das Bindemittel ein Terpolymer der Monomeren, insbesondere Ethylen, Vinylacetat, Acrylsäure, Acrylsäureester oder Maleinsäureanhydrid ist.

27. Gegenstand (1) nach Anspruch 19,
**dadurch gekennzeichnet,**
daß das Bindemittel ein Ionomer ist.

28. Gegenstand (1) nach Anspruch 19,
**dadurch gekennzeichnet,**
daß das Bindemittel ein Polyamid-Harz ist.

29. Gegenstand (1) nach einem der Ansprüche 19 bis 28,
**dadurch gekennzeichnet,**
daß die Polymer-Bindemittel ein mittleres Molekulargewicht von 3000 bis 50 000 besitzen.

30. Gegenstand (1) nach einem der Ansprüche 19 bis 29,
**dadurch gekennzeichnet,**
daß eine Mischung der genannten Stoffe verwendet ist.

31. Gegenstand (1) nach einem der Ansprüche 19 bis 30,
**dadurch gekennzeichnet,**
daß das Bindemittel keine Reaktion mit dem organischen "Pigment"-Polymer eingeht.

32. Gegenstand (1) nach einem der vorhergehenden Ansprüche,
**dadurch gekennzeichnet,**
daß ein anorganisches Lösungsmittel verwendet ist.

33. Gegenstand (1) nach einem der Ansprüche 1 bis 31,
**dadurch gekennzeichnet,**
daß ein organisches Lösungsmittel, vorzugsweise 1.1.1-Trichlorethan, verwendet ist.

34. Gegenstand (1) nach einem der vorhergehenden Ansprüche,
**dadurch gekennzeichnet,**
daß der Zusammensetzung Ruß im Gewichtsanteil von ≦ 1 % beigesetzt ist.

35. Gegenstand (1) nach einem der vorhergehenden Ansprüche,
**dadurch gekennzeichnet,**
daß das Bindemittel im Lösungsmittel gelöst ist.

36. Gegenstand (1) nach einem der Ansprüche 1 bis 34,
**dadurch gekennzeichnet,**
daß die "Pigmente" im Lösungsmittel dispergiert sind.

37. Gegenstand (1) nach einem der vorhergehenden Ansprüche,
**dadurch gekennzeichnet,**
daß dem Temperaturindikator ein Haftverbesserungsmittel, vorzugsweise Spezial Primer V144, beigesetzt ist.

38. Gegenstand (1) nach einem der vorhergehenden Ansprüche,
**dadurch gekennzeichnet,**
daß dem Temperaturindikator Mittel zur Hautverhinderung, wie Ketoxime, vorzugsweise Metoxim oder Butoxim, beigesetzt sind.

39. Gegenstand (1) nach einem der vorhergehenden Ansprüche,
**dadurch gekennzeichnet,**
daß dem Temperaturindikator ein Thixotropiemittel auf organischer Basis, vorzugsweise ein Rizinusölderivat, beigesetzt ist.

40. Gegenstand (1) nach einem der vorhergehenden Ansprüche,
**dadurch gekennzeichnet,**
daß Antioxidantien, vorzugsweise mehrkernige, sterisch gehinderte Phenole, beigesetzt sind.

41. Gegenstand (1) nach einem der vorhergehenden Ansprüche,
**dadurch gekennzeichnet,**
daß zusätzliche Pigmente, vorzugsweise Azopigmente, beigesetzt sind.

42. Gegenstand (1) nach einem der vorhergehenden Ansprüche,
**dadurch gekennzeichnet,**
daß der wärmeschrumpfbare Gegenstand eine Umhüllung, vorzugsweise eine längsgeteilte Manschette mit einem Längsverschluß ist.

43. Gegenstand (1) nach Anspruch 42,
**dadurch gekennzeichnet,**
daß die Umhüllung eine Kabelmuffe ist.

44. Gegenstand (1) nach Anspruch 42 oder 43,
**dadurch gekennzeichnet,**
daß ein wärmeaktivierbares Dichtungsmittel (6), vorzugsweise ein Heißschmelzkleber , auf der Innenseite der Umhüllung angeordnet ist.

45. Gegenstand (1) nach einem der vorhergehenden Ansprüche,
**dadurch gekennzeichnet,**
daß die Grundzusammensetzung des Temperaturindikators besteht aus:
25 g Polyamid 12
12,5 g Paraloid B66
20 g 1.1.1.-Trichlorethan.

46. Gegenstand (1) nach einem der Ansprüche 1 bis 44,
**dadurch gekennzeichnet,**
daß die Grundzusammensetzung des Temperaturindikators besteht aus:
25 g Polybutylenterephthalat
12 g Polyvinylisobutylether
19 g Ethylmethylketon / Butylacetat (50:50)
2,5 g Spezial-Primer V 944

47. Verfahren zur Herstellung eines Temperaturindikators, für einen Gegenstand nach einem der vorhergehenden Ansprüche,
**dadurch gekennzeichnet,**
daß ein organisches Polymer feingemahlen wird, daß das Mahlgut in einem mit Lösungsmittel gelösten Bindemittel dispergiert wird, wobei gegebenenfalls Zusatzmittel zur Verbesserung spezifischer Eigenschaften beigegeben werden.

48. Verfahren zur Herstellung eines Gegenstandes nach einem der Ansprüche 1 bis 46,
**dadurch gekennzeichnet,**
daß der nach Anspruch 47 hergestellte Temperaturindikator mittels eines an sich bekannten Auftragsverfahrens, wie Aufstreichen, Spritzen, Sprühen oder Drucken auf den Gegenstand aufgebracht wird.

49. Verfahren zur Herstellung einer Umhüllung für langgestreckte Substrate, insbesondere für Kabel oder Kabelspleiße mit einem Gegenstand nach einem der Ansprüche 42 bis 44,
**dadurch gekennzeichnet,**
daß der wärmeschrumpfbare Gegenstand um das Substrat herumgelegt, gegebenenfalls der Längsverschluß geschlossen wird und so lange mit Wärmezufuhr behandelt wird, bis das Substrat dichtend umschlossen ist und die Farbe des Temperaturindikators voll umgeschlagen ist.

## Claims

1. Article (1) having a temperature indicator (2, 5) attached thereto which contains a binder (3) and at least one finely divided, organic substance (4) which is substantially opaque below a certain temperature and which melts on reaching this temperature and modifies the optical properties in such a way that the temperature indicator (2, 5) becomes transparent or translucent, characterized in that the substance used is at least one organic polymer (4), and in that this substance is applied to a heat-shrinkable article (1), where the melting point of the temperature indicator (2, 5) is at least in the region, preferably above the region, of the recovery temperature of the heat-shrinkable article (1).

2. Article (1) according to Claim 1, characterized in that the colour indicator (2, 5) contains a finely divided substance produced by grinding.

3. Article (1) according to one of Claims 1 or 2, characterized in that the substance has a screen particle size of ≦ 200 »m, preferably ≦ 100 »m, where the mean particle size which occurs is between 10 and 50 »m.

4. Article (1) according to one of the preceding Claims, characterized in that the transition temperature is in the range between 150°C and 300°C, preferably between 200 and 260°C.

5. Article (1) according to one of the preceding claims, characterized in that the substance comprises a mixture of a plurality of polymers.

6. Article (1) according to one of the preceding claims, characterized in that the organic polymer is a nylon.

7. Article (1) according to Claim 6, characterized in that the polymer is nylon 6.

8. Article (1) according to Claim 6, characterized in that the polymer is nylon 66

9. Article (1) according to Claim 6, characterized in that the polymer is nylon 610.

10. Article (1) according to Claim 6, characterized in that the polymer is nylon 12.

11. Article (1) according to one of Claims 1 to 5, characterized in that the organic polymer is a polyester.

12. Article (1) according to Claim 11, characterized in that the organic polymer is polybutylene terephthalate.

13. Article (1) according to one of Claims 1 to 5, characterized in that the organic polymer is a polycarbonate.

14. Article (1) according to one of Claims 1 to 5, characterized in that the organic polymer is a polyolefin.

15. Article (1) according to Claim 14, characterized in that the organic polymer is poly-4-methyl-1-pentene.

16. Article (1) according to one of Claims 1 to 5, characterized in that the organic polymer is an olefin copolymer.

17. Article (1) according to one of the preceding claims, characterized in that the polymer is at least partially crystalline.

18. Article (1) according to one of the preceding claims, characterized in that the "colour change" takes place from white to black.

19. Article (1) according to one of the preceding claims, characterized in that the binder used is a polymeric resin.

20. Article (1) according to Claim 19, characterized in that the binder is an acrylate resin, preferably Paraloid B66.

21. Article (1) according to Claim 19, characterized in that the binder is an alkyd resin, preferably an acrylated alkyd resin.

22. Article (1) according to Claim 19, characterized in that the binder is a maleate resin.

23. Article (1) according to Claim 19, characterized in that the binder is an ethylene-vinyl acetate copolymer.

24. Article (1) according to Claim 19, characterized in that the binder is an ethylene-acrylic acid copolymer.

25. Article (1) according to Claim 19, characterized in that the binder is an ethylene-acrylate copolymer.

26. Article (1) according to Claim 19, characterized in that the binder is a terpolymer of the monomers, in particular ethylene, vinyl acetate, acrylic acid, acrylic esters or maleic anhydride.

27. Article (1) according to Claim 19, characterized in that the binder is an ionomer.

28. Article (1) according to Claim 19, characterized in that the binder is a polyamide resin.

29. Article (1) according to one of Claims 19 to 28, characterized in that the polymer binder has a mean molecular weight of from 3,000 to 50,000.

30. Article (1) according to one of Claims 19 to 29, characterized in that a mixture of said substances is used.

31. Article (1) according to one of Claims 19 to 30, characterized in that the binder does not react with the organic "pigment" polymer.

32. Article (1) according to one of the preceding claims, characterized in that an inorganic solvent is used.

33. Article (1) according to one of Claims 1 to 31, characterized in that an organic solvent, preferably 1,1,1-trichloroethane, is used.

34. Article (1) according to one of the preceding claims, characterized in that the composition contains carbon black in a proportion by weight of ≦ 1%.

35. Article (1) according to one of the preceding claims, characterized in that the binder is dissolved in the solvent.

36. Article (1) according to one of Claims 1 to 34, characterized in that the "pigments" are dispersed in the solvent.

37. Article (1) according to one of the preceding claims, characterized in that the temperature indicator contains an adhesion promoter, preferably Spezial Primer V144.

38. Article (1) according to one of the preceding claims, characterized in that the temperature indicator contains anti-skinning agents, such as ketoximes, preferably metoxime or butoxime.

39. Article (1) according to one of the preceding claims, characterized in that the temperature indicator contains an organic-based thixotropy agent, preferably a castor oil derivative.

40. Article (1) according to one of the preceding claims, characterized in that antioxidants, preferably polycyclic, sterically hindered phenols, have been added.

41. Article (1) according to one of the preceding claims, characterized in that pigments, preferably azo pigments, have additionally been added.

42. Article (1) according to one of the preceding claims, characterized in that the heat-shrinkable article is a covering, preferably a longitudinally divided gaiter with a longitudinal closure.

43. Article (1) according to Claim 42, characterized in that the covering is a cable sleeve.

44. Article (1) according to Claim 42 or 43, characterized in that a heat-activatable sealant (6), preferably a hot-melt adhesive, is arranged on the inside of the covering.

45. Article (1) according to one of the preceding claims, characterized in that the basic composition of the temperature indicator comprises:
25 g of nylon 12
12.5 g of Paraloid B66
20 g of 1,1,1-trichloroethane.

46. Article (1) according to one of Claims 1 to 44, characterized in that the basic composition of the temperature indicator comprises:
25 g of polybutylene terephthalate
12 g of polyvinyl isobutyl ether
19 g of ethyl methyl ketone/butyl acetate (50:50)
2.5 g of Spezial-Primer V 944

47. Process for the production of a temperature indicator for an article according to one of the preceding claims, characterized in that an organic polymer is finely ground and in that the ground material is dispersed in a binder dissolved by means of a solvent, additives for improving specific properties being added if desired.

48. Process for the production of an article according to one of Claims 1 to 46, characterized in that the temperature indicator produced according to Claim 47 is applied to the article by means of an application method known per se, such as brushing, spraying or printing.

49. Process for the production of a covering for elongate substrates, in particular for cables or cable splices, with an article according to one of Claims 42 to 44, characterized in that the heat-shrinkable article is placed around the substrate, the longitudinal closure is, if appropriate, closed and the article is heated until the substrate is surrounded in a sealing manner and the colour of the temperature indicator has changed completely.

## Revendications

1. Objet (1) comportant un indicateur de température (2,5), qui est disposé sur cet objet et qui contient un liant (3) et au moins une substance organique à grains fins (4) qui est, dans une grande mesure, opaque en-dessous d'une température déterminée et qui, lorsque cette température est atteinte, fond et change de propriétés optiques de sorte que l'indicateur de température (2,5) devient transparent ou translucide,
caractérisé par le fait
qu'on utilise comme substance au moins un polymère organique (4), et que cette substance est déposée sur un objet thermorétractable (1), le point de fusion de l'indicateur de température (2,5) étant situé au moins dans l'intervalle et, de préférence, au-dessus de l'intervalle de la température de rétablissement de l'objet thermorétractable (1).

2. Objet (1) suivant la revendication 1,
caractérisé par le fait
que l'indicateur coloré (2,5) contient une substance à grains fins, préparée par broyage.

3. Objet (1) suivant l'une des revendications 1 ou 2,
caractérisé par le fait
que la substance a une granulométrie ≦ 200 »m et de préférence ≦ 100 »m, la granulométrie moyenne, qui apparaît, étant comprise entre 10 et 50 »m.

4. Objet (1) suivant l'une des revendications précédentes,
caractérisé par le fait
que la température de virage est comprise entre 150°C et 300°C et de préférence entre 200 et 260°C.

5. Objet (1) suivant l'une des revendications précédentes,
caractérisé par le fait
que la substance est constituée d'un mélange de plusieurs polymères.

6. Objet (1) suivant l'une des revendications précédentes,
caractérisé par le fait
que le polymère organique est un polyamide.

7. Objet (1) suivant la revendication 6,
caractérisé par le fait
que le polymère est du polyamide 6.

8. Objet (1) suivant la revendication 6,
caractérisé par le fait
que le polymère est du polyamide 66.

9. Objet (1) suivant la revendication 6,
caractérisé par le fait
que le polymère est du polyamide 610.

10. Objet (1) suivant la revendication 6,
caractérisé par le fait
que le polymère est du polyamide 12.

11. Objet (1) suivant l'une des revendications 1 à 5,
caractérisé par le fait
que le polymère organique est un polyester.

12. Objet (1) suivant la revendication 11,
caractérisé par le fait que le polymère organique est du poly(téréphtalate de butylène).

13. Objet (1) suivant l'une des revendications 1 à 5,
caractérisé par le fait
que le polymère organique est un polycarbonate.

14. Objet (1) suivant l'une des revendications 1 à 5,
caractérisé par le fait
que le polymère organique est une polyoléfine.

15. Objet (1) suivant la revendication 14,
caractérisé par le fait
que le polymère organique est du poly-4-méthylpentène-1.

16. Objet (1) suivant l'une des revendications 1 à 5,
caractérisé par le fait
que le polymère organique est un copolymère d'oléfine.

17. Objet (1) suivant l'une des revendications précédentes,
caractérisé par le fait que
le polymère est au moins partiellement cristallin.

18. Objet (1) suivant l'une des revendications précédentes,
caractérisé par le fait
que le "virage de couleur" s'effectue du blanc au noir.

19. Objet (1) suivant l'une des revendications précédentes,
caractérisé par le fait
qu'on utilise comme liant une résine polymére.

20. Objet (1) suivant la revendication 19,
caractérisé par le fait
que le liant est une résine acrylate, de préférence du paraloïd B66.

21. Objet (1) suivant la revendication 19,
caractérisé par le fait
que le liant est une résine alkyde, de préférence une résine alkyde acrylatique.

22. Objet (1) suivant la revendication 19,
caractérisé par le fait
que le liant est une résine maléique.

23. Objet (1) suivant la revendication 19,
caractérisé par le fait
que le liant est un copolymère d'éthylène et d'acétate de vinyle.

24. Objet (1) suivant la revendication 19,
caractérisé par le fait
que le liant est un copolymère d'éthylène et d'acide acrylique.

25. Objet (1) suivant la revendication 19,
caractérisé par le fait
que le liant est un copolymère d'acrylate d'éthylène.

26. Objet (1) suivant la revendication 19,
caractérisé par le fait
que le liant est un terpolymère des monomères, notamment d'éthylène, d'acétate de vinyle, d'acide acrylique, d'ester d'acide acrylique ou d'anhydride d'acide maléique.

27. Objet (1) suivant la revendication 19,
caractérisé par le fait
que le liant est un ionomère.

28. Objet (1) suivant la revendication 19,
caractérisé par le fait
que le liant est une résine polyamide.

29. Objet (1) suivant l'une des revendications 19 à 28,
caractérisé par le fait
que le liant formé d'un polymère a un poids moléculaire moyen de 3000 à 50 000.

30. Objet (1) suivant l'une des revendications 19 à 29,
caractérisé par le fait
qu'on utilise un mélange desdites substances.

31. Objet (1) suivant l'une des revendications 19 à 30,
caractérisé par le fait
que le liant n'entre pas en réaction avec le polymère organique "pigment".

32. Objet (1) suivant l'une des revendications précédentes,
caractérisé par le fait
qu'on utilise un solvant minéral.

33. Objet (1) suivant l'une des revendications 1 à 31,
caractérisé par le fait
qu'on utilise un solvant organique, de préférence du 1.1.1-trichloroéthane.

34. Objet (1) suivant l'une des revendications précédentes,
caractérisé par le fait
qu'on ajoute de la suie en un pourcentage en poids ≦ 1 % à la composition.

35. Objet (1) suivant l'une des revendications précédentes,
caractérisé par le fait
que le liant est dissous dans le solvant.

36. Objet (1) suivant l'une des revendications 1 à 34,
caractérisé par le fait
que les "pigments" sont dispersés dans le solvant.

37. Objet (1) suivant l'une des revendications précédentes,
caractérisé par le fait
qu'un agent augmentant l'adhérence, de préférence de l'apprêt spécial V144, est ajouté à l'indicateur de température.

38. Objet (1) suivant l'une des revendications précédentes,
caractérisé par le fait
que des agents servant à empêcher la formation d'une peau, comme par exemple des cétoximes, de préférence du méthoxime ou du butoxime, sont ajoutés à l'indicateur de température.

39. Objet (1) suivant l'une des revendications précédentes,
caractérisé par le fait
qu'un agent thixotrope à base organique, de préférence un dérivé de l'huile de ricin, est ajouté à l'indicateur de température.

40. Objet (1) suivant l'une des revendications précédentes,
caractérisé par le fait
que des antioxydants, de préférence des phénols polycycliques à empêchement stérique, sont ajoutés.

41. Objet (1) suivant l'une des revendications précédentes,
caractérisé par le fait
que des pigments supplémentaires, de préférence des pigments azoiques, sont ajoutés.

42. Objet (1) suivant l'une des revendications précédentes,
caractérisé par le fait
que l'objet thermorétractable est une gaine, de préférence un manchon fendu longitudinalement et comportant une fermeture longitudinale.

43. Objet (1) suivant la revendication 42,
caractérisé par le fait
que la gaine est un manchon à câble.

44. Objet (1) suivant la revendication 42 ou 43,
caractérisé par le fait
qu'un agent d'étanchéité (6) pouvant être activé par la chaleur, de préférence une colle fusible à chaud, est disposé sur la face intérieure de la gaine.

45. Objet (1) suivant l'une des revendications précédentes,
caractérisé par le fait
que la composition de base de l'indicateur de température comprend :
25 g de polyamide 12
12,5 g de paraloid B66
20 g de 1.1.1.-trichloroéthane.

46. Objet (1) suivant l'une des revendications 1 à 44,
caractérisé par le fait
que la composition de base de l'indicateur de température comprend :
25 g de ploy(téréphtalate de butylène)
12 g d'oxyde polyvinylisobutylique
19 g d'éthylméthylcétone/acétate de butyle (50:50)
2,5 g d'apprêt spécial V944.

47. Procédé de préparation d'un indicateur de température pour un objet suivant l'une des revendications précédentes,
caractérisé par le fait
qu'on broye finement un polymère organique et qu'on disperse la substance broyée dans un liant dissous dans un solvant, en ajoutant éventuellement un additif destiné à améliorer des caractéristiques spécifiques.

48. Procédé pour fabriquer un objet suivant l'une des revendications 1 à 46,
caractérisé par le fait
qu'on dépose sur l'objet l'indicateur de température fabriqué suivant la revendication 47, au moyen d'un procédé de dépôt connu en soi, comme par exemple enduction, projection, pulvérisation ou impression.

49. Procédé pour fabriquer une gaine pour des substrats s'étendant en longueur, notamment pour des câbles ou des épissures de câbles ayant un objet suivant l'une des revendications 42 à 44,
caractérisé par le fait
qu'on enveloppe le substrat de l'objet thermorétractable, qu'on ferme éventuellement la fermeture longitudinale et qu'on lui applique un traitement avec un apport de chaleur jusqu'à ce que le substrat soit entouré de façon étanche et que la couleur de l'indicateur de température ait viré complètement.
